# EUROPÄISCHE PATENTSCHRIFT

(11) **EP 0 576 477 B1**
(45) Veröffentlichungstag und Bekanntmachung des Hinweises auf die Patenterteilung: **22.02.1995**
(21) Anmeldenummer: 92906429.3
(22) Anmeldetag: 12.03.1992
(51) Int. Cl.: C11C 3/12, B01J 31/02, B01J 31/30, B01J 31/28

(54) **VERFAHREN ZUR HERSTELLUNG VON EINFACH UNGESÄTTIGTEN FETTSÄUREN ODER DEREN DERIVATEN**
PROCESS FOR PREPARING MONO-UNSATURATED FATTY ACIDS OR THEIR DERIVATES
PROCEDE DE PREPARATION D'ACIDES GRAS MONO-INSATURES OU DE LEURS DERIVES

(30) Priorität: 21.03.1991 DE 4109246
(43) Veröffentlichungstag der Anmeldung: 05.01.1994
(73) Patentinhaber: Henkel Kommanditgesellschaft auf Aktien, 40191 Düsseldorf (DE)
(72) Erfinder: BEHR, Arno, D-4000 Düsseldorf 13 (DE); LOHR, Christoph, D-4600 Dortmund (DE); ELLENBERG, Bernd, D-4040 Neuss (DE)
(86) Internationale Anmeldenummer: EP9200542
(87) Internationale Veröffentlichungsnummer: WO9216605

(56) Entgegenhaltungen:
- EP-A- 0 253 416
- DE-A- 3 502 548
- DE-A- 4 012 873
- DE-B- 1 239 474
- LU-A- 66 893

## Beschreibung

Die Erfindung betrifft ein Verfahren zur Herstellung von einfach ungesättigten Fettsäuren oder deren Derivaten durch katalytische Hydrierung von mehrfach ungesättigten Fettsäuren oder deren Derivaten.

Technische Fettsäuren bzw. Fettsäurederivate mit hohen Ölsäuregehalten von z. B. mehr als 60 oder mehr als 70 % sind begehrte Rohstoffe für Produkte der Kosmetikindustrie, der erdölfördernden Industrie, der Textilindustrie sowie für zahlreiche weitere Anwendungen.

Die bisherigen industriellen Verfahren zur partiellen Härtung von Fettsäuren und ihren Derivaten verlaufen wenig selektiv und sind in ihrer technischen Durchführung sehr aufwendig. In der Technik wird bisher meist mit heterogenen Nickel-Katalysatoren bei hohen Temperaturen im Bereich von 120 bis 180 °C gearbeitet. Bei Verfahren mit Wasserstoffdurchfluß werden Drücke bis zu 3 bar angewendet; bei "dead-end"-Verfahren arbeitet man mit Drücken im Bereich von 1 bis 3 MPa (10 bis 30 bar). Diese Verfahren verlaufen jedoch wenig selektiv im Hinblick auf gebildete Ölsäuren; sie liefern vielmehr technische Fettsäureschnitte mit erheblichen Anteilen an gesättigten Fettsäuren, insbesondere Stearinsäure, die bei vielen technischen Anwendungen stören bzw. unter großem Aufwand aus den Ölsäureschnitten entfernt werden müssen.

In **Izv. Akad. Nauk SSSR, Ser. Khim., 3, 642 (1979)**, wird die Hydrierung von Linolsäuremethylester mit Nickelkatalysatoren beschrieben. Vor der Reaktion muß eine aufwendige, mehrstündige Aktivierung des Katalysators mit Natriumboranat erfolgen. Eine technische Durchführung dieses Verfahrens verbietet sich aufgrund des ungünstigen Edukt/Katalysator-Verhältnisses von 25 : 1. Zudem verläuft die Hydrierung nicht selektiv; in Nickel/Methylformamid-Systemen werden als Nebenprodukt 12 %, in Nickel/Dimethylacetamid-Systemen 15 % Methylstearat gebildet.

Aus **J. Cat., 24, 536 (1972)** ist schließlich bekannt, daß sich Fettsäurederivate in Gegenwart von Komplexen aus einem Übergangsmetall und einem aprotischen amidischen Lösungsmittel, beispielsweise Dimethylformamid, hydrieren lassen. Die dort beschriebenen Rhodium- bzw. Nickelkatalysatoren müssen allerdings ebenfalls vor der Reaktion in sehr aufwendiger Weise mit äquimolaren Mengen des teuren Reduktionsmittels Natriumboranat vorbehandelt werden. Eine technische Durchführung dieses Verfahrens ist jedoch nicht möglich, da es außergewöhnlich hohe Katalysatormengen erfordert; bei der Rhodiumkatalyse ist maximal ein Edukt/Katalysator-Verhältnis von 10 : 1 möglich, bei der Nickel-Katalyse nur von 5 : 1. Bei der Herstellung von ungesättigten Fettsäuren für Anwendungen im Bereich der Kosmetik oder der Nahrungsmittelindustrie besteht zudem der Nachteil, daß die Verwendung von amidischen Komplexierungsmitteln aus ökotoxikologischen Gründen unerwünscht ist.

Die Aufgabe der Erfindung lag somit darin, ein Verfahren zur Herstellung von einfach ungesättigten Fettsäuren oder deren Derivaten zu entwickeln, das frei von den geschilderten Nachteilen ist.

Gegenstand der Erfindung ist ein Verfahren zur Herstellung von einfach ungesättigten Fettsäuren oder deren Derivaten durch katalytische Hydrierung von mehrfach ungesättigte Fettsäuren oder deren Derivaten, das sich dadurch auszeichnet, daß man mehrfach ungesättigten Fettsäuren oder deren Derivate bei Temperaturen von 0 bis 150 °C und einem Druck im Bereich von 800 bis 1.500 hPa mit Wasserstoff und in Gegenwart eines Katalysatorsystems, enthaltend
a) ein Palladiumsalz und
b) einen Kohlensäureester
sowie gegebenenfalls
c) eine Base zur Neutralisation der bei der Reduktion des Palladiumsalzes gebildete Säure,
d) Wasser und/oder inerte, mit Wasser nicht mischbare Lösemittel,
hydriert.

Das Verfahren der Erfindung kann bei Raumtemperatur und bei Wasserstoff-Normaldruck durchgeführt werden, zeichnet sich durch geringe Katalysatormengen und kurze Reaktionszeiten aus und führt selektiv zu den einfach ungesättigten Fettsäuren unter Vermeidung der Bildung vollständig gesättigter Produkte. Das Verfahren der Erfindung kann in üblichen Rührreaktoren durchgeführt werden, wobei nach der Reaktion eine einfache Abtrennung des Katalysators durch Phasentrennung möglich ist; damit kann der Katalysator problemlos wiedergewonnen und erneut eingesetzt werden. Der Katalysator ist resistent gegenüber Katalysatorgiften, so daß Fettsäuren oder deren Derivate in den unterschiedlichen Qualitäten in der Hydrierung eingesetzt werden können. Die als Aktivator verwendeten Kohlensäureester sind ökotoxikologisch unbedenklich, so daß die hergestelleten Produkte auch den hohen Anforderungen genügen, die an Kosmetikrohstoffe und Nahrungsmittel gestellt werden. Letztlich eröffnet das erfindungsgemäße Verfahren den Zugang zu Fettstoffen mit einem hohen Elaidinsäuregehalt.

Als Ausgangsstoffe für das erfindungsgemäße Verfahren kommen Fettsäuren oder deren Derivate fogender Herkunft in Betracht: Sojaöl, Sonnenblumenöl, Palmöl, Baumwollsamenöl, Fischöl, Tallöl, Erdnußöl, Leinöl, Maiskeimöl, Olivenöl, Rüböl, Rindertalg und Schweineschmalz; besonders interessant ist das Verfahren für Fettstoffe aus natürlichen, nachwachsenden Rohstoffen, die neben einem bereits hohen Ölsäuregehalt auch höhere Gehalte an Linol- und/oder Linolensäure aufweisen. Da die in diesen Materialiern enthaltene Ölsäure im Verfahren der Erfindung nicht hydriert wird, erhält man letztlich Fettsäureschnitte, deren Gehalt an Ölsäure und Isomeren der Ölsäure sich aus der Summe der ursprünglich vorhandenen Ölsäure und der selektiv hydrierten Linolsäure (einschließlich hydrierter höher ungesättigter Fettsäuren wie Linolensäure) zusammensetzt. Im Verfahren der Erfindung einsetzbar sind sowohl die freien Festtsäuren als auch Ester derselben wie die Methylester oder Ethylester sowie Triglyceride und Amide dieser Säuren sowie ungesättigte Fettalkohole, die bekanntlich durch selektive Hydrierung entsprechender Fettsäuremethylester erhältlich sind.

Als Palladiumsalze können in dem Verfahren der Erfindung z. B. Halogenide, Pseudohalogenide, Acetate, Acetylacetonate sowie andere, in der Katalysetechnik übliche weitere Salze und Komplexe eingesetzt werden. Besonders bevorzugt ist Palladiumdichlorid, das zur Bildung von Komplexen mit in dem Reaktionssystem verbesserter Löslichkeit zusammen mit Alkalimetallhalogeniden eingesetzt werden kann, wobei sich z. B. mit NaCl ein Komplex der Zusammensetzung Na₂PdCl₄ ausbildet.

Üblicherweise wird das erfindungsgemäß zu verwendende Katalysatorsystem vor der Zugabe der ungesättigten Fettsäuren beziehungsweise Fettsäurederivate durch Reduktion mit Wasserstoff in eine aktivierte Form überführt. Es ist jedoch auch möglich, die Aktivierung in Anwesenheit der ungesättigten Fettsäuren beziehungsweise Fettsäuederivate vorzunehmen.

Als Kohlensäureester, die als Aktivatoren dienen, kommen Verbindungen, die der Formel **(I)** 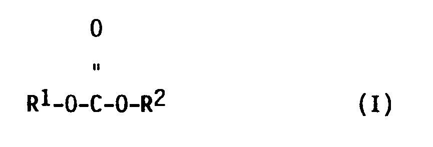
in der R¹ für einen Akylrest mit 1 bis 4 Kohlenstoffatomen und R² für Wasserstoff oder R¹ steht, oder der Formel **(II)** entsprechen, 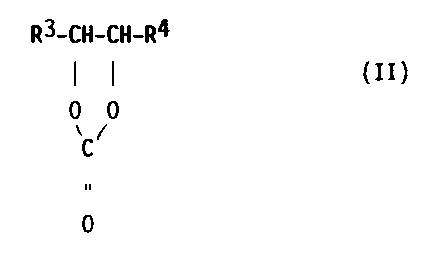
in der R³ und R⁴ unabhängig voneinander für einen Wasserstoff oder einen Alkylrest mit 1 bis 4 Kohlenstoffatomen stehen, in Betracht. Besonders bevorzugt ist die Verwendung von Ethylencarbonat und 1,2-Propylencarbonat. Sowohl bei den offenkettigen als auch den cyclischen Kohlensäureestern handelt es sich um bekannte Stoffe, die nach den einschlägigen Verfahren der präparativen organischen Chemie zugänglich sind.

Die den Katalysatorsystemen zuzusetzenden Basen dienen lediglich zur Neutralisation der bei der Katalysatoraktivierung mit Wasserstoff gebildeten Säuren und werden im allgemeinen in stöchiometrischen Mengen, bezogen auf zu erwartende Säuremengen, eingesetzt. Geeignete Basen sind z. B. Oxide, Hydroxide oder Carbonate von Alkali- oder Erdalkalimetallen, insbesondere Natriumcarbonat, in Substanz oder auch in wäßriger Lösung.

Die Menge des gegebenenfalls dem Katalysatorsystem zuzusetzenden Wassers ist nicht kritisch. Ein größerer Wasseranteil kann erwünscht sein, wenn sich das Reaktionssystem unmittelbar nach der Hydrierung in ein Zweiphaensystem mit dem hydrierten Produkt in der einen Phase auftreten soll. Besonders vorteilhaft ist z. B. 1,2-Propylencarbonat mit 0,1 bis 1 Vol.-Teil Wasser.

Die in dem Verfahren der Erfindung gegebenenfalls einzusetzenden inerten, mit Wasser nicht mischbaren Lösemittel nehmen keinen Einfluß auf die Hydrierungsreaktion, sondern dienen zur Ausbildung eines Zweiphasensystems in dem Reaktionsgemisch, das die Abtrennung der Reaktionsprodukte nach Beendigung der Hydrierung erleichtert. Zweckmäßigerweise verwendet man hierfür destillativ leicht abtrennbare Lösemittel, z. B. gesättigte Kohlenwasserstoffe, wie Hexan oder Octan oder Gemische derselben.

Gemäß einer bevorzugten Ausführungsform der Erfindung setzt man das Palladiumsalz und die Fettsäuren oder deren Derivate in molaren Verhältnissen im Bereich von 1 : 5 bis 1 : 20.000, insbesondere von 1 : 1.000 bis 1 : 5.000, ein.

Gemäß einer weiteren vorteilhaften Ausführungsform der Erfindung setzt man das Palladiumsalz und den Kohlensäureester in molaren Verhältnissen von mindestens 1 : 10 ein, wobei jedoch ein beliebiger Überschuß des Aktivators möglich ist, der, abhängig von seinem Siedepunkt, gleichzeitig als Lösemittel des Einsatzstoffes dienen kann. Technisch bevorzugt ist ein molares Verhältnis von Palladiumsalz zu Kohlensäureester im Bereich von 1 : 1.000 bis 1 : 100.000.

Das Verfahren der Erfindung ist bei einer Reaktionstemperatur im Bereich von 0 bis 150 °C durchführbar; technisch bevorzugt ist der Temperaturbereich von 10 bis 60, insbesondere 15 bis 30 °C.

Die Reaktionszeit, die für das Verfahren der Erfindung erforderlich ist, ist abhängig vom Einsatzstoff, von der verfahrenstechnischen Durchführung und der Größe des Reaktionsansatzes und liegt üblicherweise zwischen 5 min und 8 h, insbesondere zwischen 10 min un 60 min. Grundsätzlich wird in dem Verfahren der Erfindung dem Reaktionssystem solange Wasserstoff angeboten, bis die theoretisch berechnete Wasserstoffmenge aufgenommen worden ist.

Das Verfahren der Erfindung kann in Apparaturen aus nahezu beliebigen Werkstoffen durchgeführt werden. Bevorzugt sind Apparaturen, die ein intensives Rühren der Reaktionsgemische gestatten. Wegen der Arbeitsmöglichkeit bei Normaldruck sind Glasapparaturen technisch vorteilhaft.

Eine typische Laborapparatur zur Durchführung des Verfahrens der Erfindung umfaßt einen 500 ml-Vierhals-Glasreaktor mit Einfüllöffnung, Thermometer, Rührer und Rückflußkühler. Als Rührer finden beliebige Laborrührer Verwendung; besonders bevorzugt sind Flügelrührer oder Propellerrührer. Die bevorzugte Umdrehungsgeschwindigkeit des Rührers liegt bei 400 bis 1.200 Umdrehungen pro min, insbesondere bei 700 bis 900 U/min. Der Auslaß des Rückflußkühlers kann mit einer Meßbürette mit Druckausgleich verbunden werden, in der die benötigte Wasserstoffmenge vorgelegt ist. Über einen Dreiwegehahn kann die Apparatur evakuiert und mit Wasserstoff oder Stickstoff bzw. Argon befüllt werden. Die Meßbürette wird mit Wasserstoff gefüllt. Der Reaktor kann, falls erforderlich, mit Hilfe eines Öl- oder Wasserbades thermostatisiert werden.

Als typische Technikumsapparatur kann z. B. ein 60 1-Rührreaktor mit Anschlüssen für Wasserstoff, Stickstoff, Vakuum, Flüssigkeitszugabe, Sicherheitsventil, Thermostutzen, Rührung und Bodenablaßventil eingesetzt werden. Der Wasserstoff wird für eine optimale Verteilung im Reaktor unterhalb des untersten Rührelementes über eine Ringdüse im Reaktor verteilt. Die Rührung kann mit Intermig-Rührelementen und bei einer Rührerdrehzahl von 50 bis 500 U/min, insbesondere 350 bis 450 U/min, erfolgen. Eine eventuelle Thermostatisierung erfolgt über einen Doppelmantel des Reaktors. Die Wasserstoffzuleitung ist mit Druck- und Durchflußregelgeräten ausgerüstet, die eine Integration der zugeführten Wasserstoffmenge ermöglichen. Diese Wasserstoffintegration dient zur Ermittlung des Reaktionsendes. Der beschriebene Rührreaktor dient sowohl zum Ansetzen der Katalysatorlösung, zu seiner Aktivierung durch Reduzierung mit Wasserstoff, zur Durchführung der Reaktion und zur Phasenseperation nach der Reaktion. Über das Bodenablaßventil können die Katalysatorphase und die Produktphase in unterschiedliche Auffangbehälter abgelassen werden. Die Katalysatorphase kann, falls erforderlich, über eine Rohrleitung für den nächsten Reaktionsansatz in den Rührreaktor rezirkuliert werden.

Die folgenden Beispiele sollen den Gegenstand der Erfindung näher erläutern, ohne ihn darauf einzuschränken.

### Beispiele

### Beispiel 1:

**Herstellung des Katalysatorsystems.** Es wurde eine Lösung angesetzt, die 84,8 mg PdCl₂ und 54,9 mg NaCl (zur Ausbildung des Komplexes der Zusammensetzung Na₂PdCl₄) in 50 ml Propylencarbonat enthielt. Die Komponenten wurden unter Stickstoff durch Rühren (24 h) in Lösung gebracht (1 ml dieser Lösung enthielten 1 mg Palladium). Parallel dazu wurde eine zweite Lösung angesetzt, und zwar von 0,995 g Natriumcarbonat in 250 ml destilliertem Wasser.

### Beispiel 2:

**Selektivhydrierung von Sonnenblumenölfettsäure.** 2 ml der Palladiumlösung (2 mg = 18,8 »mol Natriumcarbonat) und 50 ml Propylencarbonat wurden in einem Glasautoklaven vorgelegt. Das Druckgefäß wurde mit Wasserstoff gefüllt und der Katalysator bei 25 °C unter Rühren (800 U/min) 5 min voraktiviert. Man erhielt eine bräunliche Lösung des Katalysators, in die mit einer Spritze 10 g Sonnenblumenfettsäure der Zusammensetzung

| | |
|---|---|
| Linolsäure | 63,0 Gew.-% |
| Ölsäure | 28,0 Gew.-% |
| Stearinsäure | 1,6 Gew.-% |

gegeben wurden. Das Reaktionsgefäß wurde mit der Wasserstoffbürette verbunden, die die berechnete stöchiometrische Menge an Wasserstoff enthielt.

Nach der Reaktion lag eine homogene Lösung vor, die durch Zusatz von n-Hexan in zwei Phasen aufgetrennt werden konnte. Die untere Propylencarbonat-Phase enthielt den Katalysator; sie wurde rezirkuliert. Die obere organische Phase enthielt das Produkt, das isoliert und gaschromatographisch analysiert wurde.

### Kenndaten des Produktes:

| | |
|---|---|
| Linolsäure | 0,0 Gew.-% |
| Ölsäure/Elaidinsäure | 87,2 Gew.-% |
| Stearinsäure | 4,8 Gew.-% |

Nach einer Reaktionszeit von insgesamt 34 min betrug das molare Verhältnis von Ölsäure zu Elaidinsäure im Reaktionsprodukt 1 : 1,5.

### Beispiel 3:

Beispiel 2 wurde wiederholt, die Reaktionstemperatur jedoch auf 70 °C erhöht.

### Kenndaten des Produktes:

| | |
|---|---|
| Linolsäure | 0,0 Gew.-% |
| Ölsäure/Elaidinsäure | 89,6 Gew.-% |
| Stearinsäure | 4,8 Gew.-% |

Nach einer Reaktionszeit von insgesamt 20 min betrug das molare Verhältnis von Ölsäure zu Elaidinsäure im Reaktionsprodukt 1 : 1,9.

### Beispiel 4:

Beispiel 2 wurde wiederholt, die Reaktionstemperatur jedoch auf 100 °C erhöht.

### Kenndaten des Produktes:

| | |
|---|---|
| Linolsäure | 0,0 Gew.-% |
| Ölsäure/Elaidinsäure | 90,0 Gew.-% |
| Stearinsäure | 4,8 Gew.-% |

Nach einer Reaktionszeit von insgesamt 12 min betrug das molare Verhältnis von Ölsäure zu Elaidinsäure im Reaktionsprodukt 1 : 2,1.

### Beispiel 5:

Beispiel 2 wurde unter Einsatz von 10 g Rapsöl wiederholt. Gehalt an Fettsäure im Rapsöl:

| | |
|---|---|
| Linolsäure | 23,5 Gew.-% |
| Ölsäure | 64,0 Gew.-% |
| Stearinsäure | 1,0 Gew.-% |

### Kenndaten des Produktes:

| | |
|---|---|
| Linolsäure | 0,9 Gew.-% |
| Ölsäure/Elaidinsäure | 84,8 Gew.-% |
| Stearinsäure | 7,0 Gew.-% |

Nach einer Reaktionszeit von insgesamt 46 min betrug das molare Verhältnis Ölsäure zu Elaidinsäure im Reaktionsprodukt 1 : 1,9.

### Beispiel 6:

Beispiel 2 wurde unter Einsatz von 10 g Raps-Methylester wiederholt. Gehalt der Fettsäure im Ester:

| | |
|---|---|
| Linolsäure | 23,5 Gew.-% |
| Ölsäure/Elaidinsäure | 66,0 Gew.-% |
| Stearinsäure | 1,5 Gew.-% |

### Kenndaten der Fettsäurekomponente des Produktes:

| | |
|---|---|
| Linolsäure | 0,5 Gew.-% |
| Ölsäure/Elaidinsäure | 86,0 Gew.-% |
| Stearinsäure | 5,0 Gew.-% |

Nach einer Reaktionszeit von 90 min betrug das Verhältnis von Ölsäure zu Elaidinsäure im Produkt 1 : 1,9.

### Beispiel 7:

Beispiele 1 und 2 wurden unter Einsatz von 50 ml Ethylencarbonat als Lösungsmittel wiederholt.

### Kenndaten des Produktes:

| | |
|---|---|
| Linolsäure | 0,0 Gew.-% |
| Ölsäure/Elaidinsäure | 91,6 Gew.-% |
| Stearinsäure | 3,6 Gew.-% |

Nach einer Reaktionszeit von insgesamt 110 min betrug das molare Verhältnis Ölsäure zu Elaidinsäure im Reaktionsprodukt 1 : 1,6.

## Patentansprüche

1. Verfahren zur Herstellung von einfach ungesättigten Fettsäuren oder deren Derivate durch katalytische Hydrierung von mehrfach ungesättigten Fettsäuren oder deren Derivaten, **dadurch gekennzeichnet**, daß man mehrfach ungesättigte Fettsäuren oder deren Derivate bei Temperaturen von 0 bis 150 °C und einem Druck im Bereich von 800 bis 1.500 hPa mit Wasserstoff und in Gegenwart eines Katalysatorsystems, enthaltend
a) ein Palladiumsalz und
b) einen Kohlensäureester
sowie gegebenenfalls
c) eine Base zur Neutralisation der bei der Reduktion des Palladiumsalzes gebildeten Säure,
d) Wasser und/oder inerte, mit Wasser nicht mischbare Lösemittel,
hydriert.

2. Verfahren nach Anspruch 1, **dadurch gekennzeichnet**, daß man Kohlensäureester der Formel **(I),** 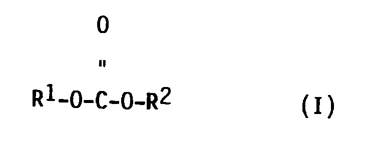 in der R¹ für einen Alkylrest mit 1 bis 4 Kohlenstoffatomen und R² für Wasserstoff oder R¹ steht, einsetzt.

3. Verfahren nach Anspruch 1, **dadurch gekennzeichnet**, daß man Kohlensäureester der Formel **(II),** 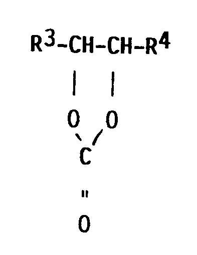 in der R³ und R⁴ unabhängig voneinander für ein Wasserstoff oder einen Alkylrest mit 1 bis 4 Kohlenstoffatomen stehen, einsetzt.

4. Verfahren nach einem der Ansprüche 1 bis 3, **dadurch gekennzeichnet,** daß man das Palladiumsalz und die Fettsäuren oder deren Derivate in molaren Verhältnissen im Bereich von 1 : 5 bis 1 : 20.000 einsetzt.

5. Verfahren nach mindestens einem der Ansprüche 1 bis 4, **dadurch gekennzeichnet**, daß man das Palladiumsalz und den Kohlensäureester in molaren Verhältnissen im Bereich von mindestens 1 : 10 einsetzt.

6. Verfahren nach mindestens einem der Ansprüche 1 bis 5, **dadurch gekennzeichnet**, daß man die Reaktion bei Temperaturen im Bereich von 10 bis 60 °C durchführt.

## Claims

1. A process for the production of monounsaturated fatty acids or derivatives thereof by catalytic hydrogenation of polyunsaturated fatty acids or derivatives thereof, **characterized in that** polyunsaturated fatty acids or derivatives thereof are hydrogenated with hydrogen at temperatures of 0 to 150°C, under a pressure in the range from 800 to 1500 hPa and in the presence of a catalyst system containing
a) a palladium salt and
b) a carbonic acid ester
and optionally
c) a base for neutralization of the acid formed during reduction of the palladium salt,
d) water and/or inert water-immiscible solvents.

2. A process as claimed in claim 1, **characterized in that** carbonic acid esters corresponding to formula **(I):** 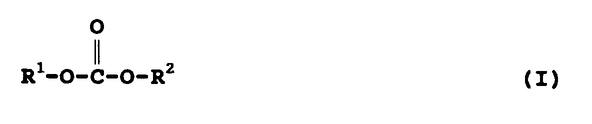 in which R¹ is a C₁₋₄ alkyl radical and R² is hydrogen or has the same meaning as R¹,
are used.

3. A process as claimed in claim 1, **characterized in that** carbonic acid esters corresponding to formula **(II):** 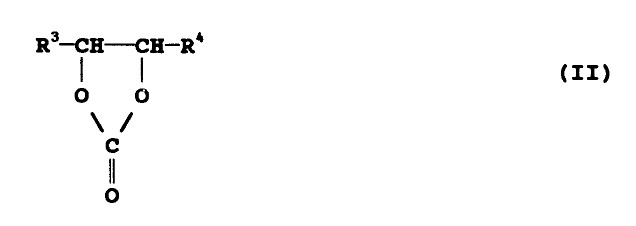 in which R³ and R⁴ independently of one another represent hydrogen atoms or a C₁₋₄ alkyl radical,
are used.

4. A process as claimed in any of claims 1 to 3, **characterized in that** the palladium salt and the fatty acids or their derivatives are used in molar ratios of 1:5 to 1:20,000.

5. A process as claimed in at least one of claims 1 to 4, **characterized in that** the palladium salt and the carbonic acid ester are used in molar ratios of at least 1:10.

6. A process as claimed in at least one of claims 1 to 5, **characterized in that** the reaction is carried out at temperatures of 10 to 60°C.

## Revendications

1. Procédé d'obtention d'acides gras mono-insaturés ou de leurs dérivés, par hydrogénation catalytique d'acides gras poly-insaturés ou de leurs dérivés, caractérisé en ce que l'on hydrogène des acides gras poly-insaturés ou leurs dérivés à des températures allant de 0 à 150°C et à une pression dans la zone de 800 à 1.500 hPa, avec de l'hydrogène et en présence d'un système de catalyseurs contenant :
a) un sel de palladium et
b) un ester d'acide carbonique
ainsi qu'éventuellement,
c) une base pour la neutralisation de l'acide formé au cours de la réduction du sel de palladium,
d) de l'eau et/ou un solvant inerte non miscible à l'eau.

2. Procédé selon la revendication 1, caractérisé en ce que l'on met en oeuvre un ester d'acide carbonique de formule I 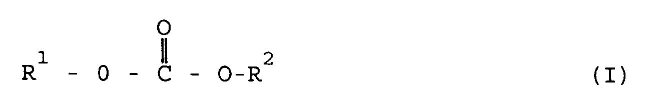 dans laquelle R¹ représente un radical alcoyle ayant de 1 à 4 atomes de carbone et R² représente de l'hydrogène ou le radical R¹.

3. Procédé selon la revendication 1, caractérisé en ce que l'on met en oeuvre un ester d'acide carbonique de formule II 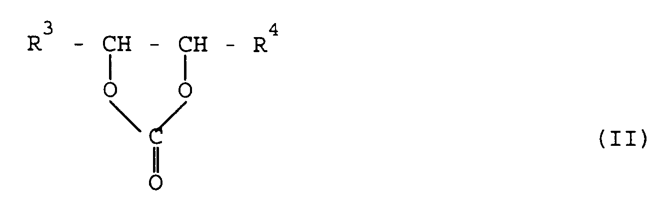 dans laquelle R³ et R⁴ indépendamment l'un de l'autre, représentent un hydrogène ou un radical alcoyle ayant de 1 à 4 atomes de carbone.

4. Procédé selon l'une des revendications 1 à 3, caractérisé en ce que l'on met en oeuvre le sel de palladium et les acides gras ou leurs dérivés dans des rapports molaires dans la zone allant de 1 : 5 à 1 : 20.000.

5. Procédé selon au moins une des revendications 1 à 4, caractérisé en ce que l'on met en oeuvre le sel de palladium et l'ester d'acide carbonique dans des rapports molaires dans la zone d'au moins 1 : 10.

6. Procédé selon au moins une des revendications 1 à 5, caractérisé en ce que l'on effectue la réaction à des températures dans la plage de 10 à 60°C.
